# EUROPEAN PATENT SPECIFICATION

(11) **EP 0 738 225 B1**
(45) Date of publication and mention of the grant of the patent: **07.04.1999**
(21) Application number: 94904097.6
(22) Date of filing: 04.01.1994
(51) Int. Cl.: B65D 19/34

(54) **PALLET OF WOUND CORRUGATED PAPERBOARD**
PALETTE AUS GEWICKELTER WELLPAPE
PALETTE EN CARTON ONDULE ET ENROULE

(43) Date of publication of application: 23.10.1996
(73) Proprietor: VISY BOARD PROPERTIES PTY. LTD., Reservoir, VIC 3073 (AU)
(72) Inventor: ONG, Alex, North Carlton, VIC 3054 (AU); CHIODO, Ross, Reservoir, VIC 3073 (AU); MAMMOLITI, John, Reservoir, VIC 3073 (AU)
(74) Representative: Schmitz, Jean-Marie
(86) International application number: AU9400008
(87) International publication number: WO9518752

(56) References cited:
- AU-A- 3 839 893
- JP-A- 5 065 163
- US-A- 2 432 295
- US-A- 3 661 099

## Description

The present invention concerns a pallet and a method of forming a pallet.

Pallets are widely used in the transportation and storage of goods and are most commonly manufactured from wooden slats secured to the opposite sides of wooden spacers to create fork lift access openings. Wooden pallets are often hired by the user, but because of their capital cost, they should be returned for reuse. This additional transportation cost serves to exacerbate the hiring or capital cost of the pallets. Although one-way wooden pallets of low quality material are available, their cost is still relatively prohibitive and the environmental consequences of such use of wood is becoming increasingly unpopular.

In the past, many attempts have been made to create a one-way pallet of material other than wood, and while the capital cost is reduced by fabricating a pallet from folded corrugated board blanks or from moulded waste paper pulp, such pallets have not thus far been able to carry an adequate load or are not sufficiently less expensive than one-way wooden pallets.

A typical example of a pallet proposed to be manufactured from corrugated paperboard is found in US-A-2,432,295 Donahue, which described a pallet made from corrugated board comprising spaced base and platform members each formed from sheets of board between which elements of adhesively bonded corrugated board are sandwiched with the corrugations on edge. The base and platform members are held in spaced relation by spacer blocks which may be formed from tightly wound corrugated board members on edge. The main shortcoming of this proposal is that the formation of the base and platform members is labour intensive and therefore expensive, and unless the corrugated board elements are carefully assembled and maintained on edge, the reinforcing effectiveness of the corrugated board elements may be seriously compromised.

In our AU-A 11162/92 we described a pallet formed from a multiplicity of interconnected shaped elements formed from tightly wound corrugated board, each element having a central shaped opening and having portions defining load-bearing beam members intersecting desired regions of support of the pallet while this pallet functioned adequately in its load bearing performance, its construction from separate shaped elements was found to be too labour intensive and therefore not cost effective.

It is an object of the present invention to provide a one-way lightweight pallet which is able to support adequate loads and which can be manufactured in a less labour intensive manner than the prior art pallets.

The pallet of the present invention is described in claim 1 and the method of forming a pallet is in claim 7.

The invention therefore provides a pallet comprising a pallet body having an upper load supporting face and a lower face, said pallet body being formed from corrugated paperboard tightly wound in multiple thicknesses which are in intimate contact with each other with the corrugations of the multiple thicknesses extending substantially perpendicularly between said upper and lower faces, said tightly wound multiple thicknesses of corrugated paperboard defining a multiplicity of load bearing beam members and adjacent shaped openings in the pallet body, said beam members being positioned to intersect those regions of the pallet body which in use are engaged by the forks of a fork lifting device during elevation of the pallet, said body being formed from a length of single-face corrugated board continuously wound to define said multiplicity of load bearing beam members and adjacent shaped openings.

Preferably, said shaped openings are of limited transverse dimensions so as to provide an upper load supporting face, said limited dimensions being such as to enable a person taking care to stand on the upper load supporting face of the pallet.

By making the pallet from a single element of corrugated board, or a limited number of elongate connected elements, the labour content involved in manufacturing the pallet is significantly reduced since the only significant labour involved is in the positioning of formers for defining the shaped openings as the corrugated board is wound to define the pallet. This enables the resultant pallet to carry a load, and to be stood upon, without the need for a covering cap or flat top member, as is required in the case of the prior art pallet of AU-A-11162/92.

The element(s) of corrugated board defining the pallet are tightly wound to define the load bearing beams and the adjacent shaped openings with the adjacent elements of corrugated board adhesively secured to each other to maintain the desired pallet configuration.

In a particularly preferred form of the invention, the openings comprise a central circular or square opening, a pair of opposed generally triangular openings, a pair of truncated triangular openings positioned at 90° to the triangular openings, a further pair of truncated triangular openings at about 45° to the preceding pair, a still further pair of truncated triangular openings at about 90° to the preceding pair, two pairs of truncated triangular openings at 45° to each opening of the preceding pair, and a peripheral element of multiple layers of corrugated board defining a generally square periphery of the pallet and having generally triangular openings at each corner.

Although it is possible to form fork access openings in the corrugated board elements, it is preferred to provide access openings by separately formed feet which are preferably made of wound corrugated board adhesively secured to the base of the pallet. If desired, the feet may be waxed at the edges which contact the floor or otherwise protected against moisture damage.

In another aspect, the invention provides a method of forming a pallet comprising winding multiple layers of a narrow strip of single-face corrugated board around formers defining openings of limited transverse dimensions positioned so as to define a pallet having an upper surface which is capable of supporting a load and on which a person is able to stand.

In order that the invention may be more readily understood, preferred embodiments will now be described with reference to the accompanying drawings in which:
Figure 1 is a plan view of a pallet embodying the invention;
Figure 2 is a side elevation of the pallet showing the positioning of the support feet of the pallet, and
Figure 3 is an enlarged fragmentary plan view showing the manner in which the corrugated board is wound to define the pallet configuration shown in Figure 1.

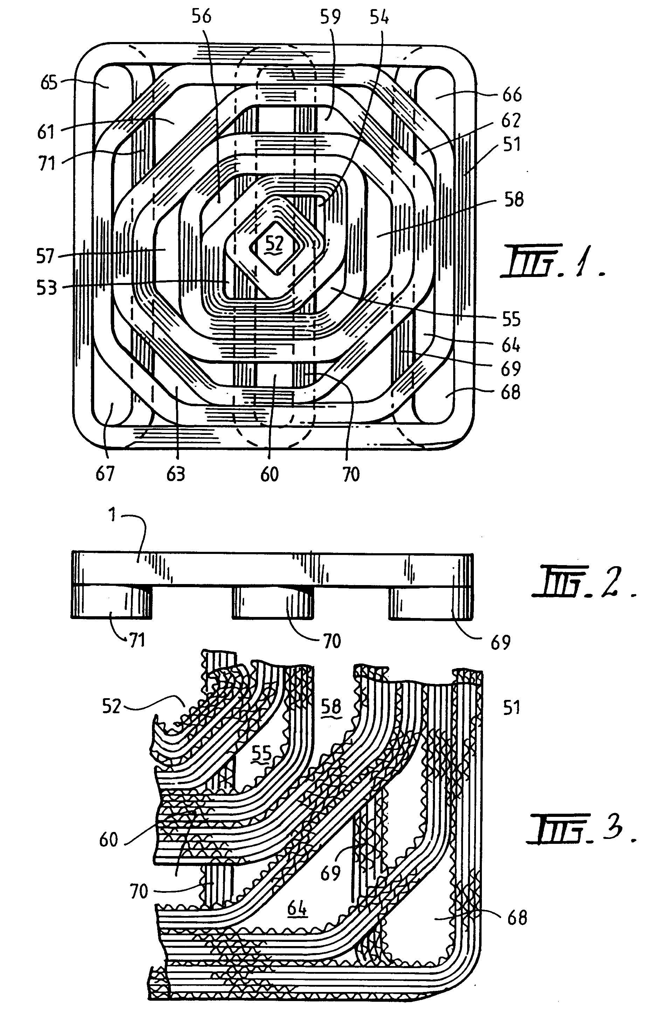

Referring to Figures 1 to 3 of the drawings, the pallet is formed from a continuous length of single-face corrugated board wound in multiple layers to define a continuous supporting element 51 defining a central square opening 52, which may alternatively be round, a pair of opposed generally triangular openings 53, 54, a pair of opposed truncated triangular openings 55, 56 at 90° to the triangular openings 53, 54, a further pair of larger truncated triangular openings 57, 58, located at 45° to the preceding pair, a further pair of slightly larger truncated triangular openings 59, 60 at 90° to the preceding pair, two further opposed pairs of larger truncated triangular openings 61, 62, 63, 64 at 45° to each of the preceding openings 59, 60, and triangular openings 65, 66, 67 and 68 at the corners of the pallet defined by the square peripheral element 51 of wound single-face corrugated board.

Although the above configuration is presently preferred, it will be appreciated that other configurations may be adopted to achieve a similar result, providing a supporting pallet which is able to be stood upon and which will support the required loads without the need for an enclosing cap, as is provided in the prior art pallet described in AU-A-11162/92.

Formation of triangular and truncated triangular openings in the pallet is for the purpose of generating a final pallet shape which is substantially square, and for providing cross beam members which are at an angle, in the present formation, preferably 45°, to the principal direction of support by the lifting forks between the feet described below. These beam members provide the resistance to bending of the pallet when the pallet is lifted by forks carrying a load. The arrangement of openings reduces the amount of corrugated board used to form the pallet while ensuring that the resistance to bending of the pallet will be satisfactorily met by the beam members.

Different beam/opening configurations can be used to produce pallets of sufficient strength. For example, the corrugated board strip may be wound to produce parallel beam members separated by narrow rectangular openings, extending transversely to the direction of fork support.

The pallet is provided with three elongate generally rectangular feet 69, 70 and 71, which preferably comprise wound single-face corrugated board defining an open rectangular loop of the configuration shown in Figures 1 and 3. If desired, the edges of the feet which are to contact a support surface may be treated to prevent damage by moisture. For example, the edges may be dipped in water-proofing wax or may have thin particle board laminated to their lowermost faces. The provision of separate feet which are adhesively secured to the lower face of the pallet is a preferred method of providing fork access for the pallet since the provision of slots in the edges of the corrugated board elements has the disadvantage of weakening the structural integrity of the pallet.

The described arrangement of openings in the pallet means that each beam has about eight layers of board so that a load of the order of 1 tonne may be supported by the pallet, even with as much as 20 to 25% of the pallet unsupported by the lifting forks, without significant flexing of the pallet. In this regard, the positioning of the feet as shown in Figure 2 of the drawings maximizes the strength of the pallet and reduces flexing during lifting by a fork lift. If desired, a cap similar to that shown in AU-A-11162/92 may be used for cosmetic purposes, although the use of such a cap would increase the production cost of the pallet.

The pallet according to this embodiment of the invention has a generally square outer periphery defined by multiple layers of single-face corrugated board tightly wound from a central starting position around a number of formers of different shapes to define the openings visible in Figures 1 and 2. The continuous multi-layered element which defines the openings also defines load carrying elements which radiate in a generally spiral manner from the central opening to the periphery referred to above.

The use of a single length of corrugated board wound into the configuration described above not only reduces the labour content of the product but also increases its structural integrity. It will be appreciated that while it is preferred to use a single length of board, similar results can be obtained by using limited numbers of relatively long strips of board secured together or overlapped with each other.

Since the pallet described above are made entirely from corrugated board, it is lightweight in construction (4 to 5 kg compared with 40 to 50 kg for wood), significantly less expensive than one-way wooden pallets, and can be disposed of for recycling after it has been used. The pallet has high compressive strength and is able to withstand loads of the order of 1 to 6 tonnes in the configuration shown. The pallet flexes only minimally when lifted or when it is supported on an irregular surface and does not present any nails or splinters to the user or to the goods supported thereon. Furthermore, since it is light in weight, it significantly reduces the risk of injury during handling.

The cost of each pallet is significantly less than the cost of a wooden pallet so that it may be more readily disposed of after each use. The pallet may be made from recycled paper and further savings are possible by making the base elements from off-cut paper or corrugated board. The pallet is able to be recycled after use to significantly reduce environmental impacts.

## Claims

1. A pallet comprising a pallet body having an upper load supporting face and a lower face, said pallet body being formed from corrugated paperboard tightly wound in multiple thicknesses which are in intimate contact with each other with the corrugations of the multiple thicknesses extending substantially perpendicularly between said upper and lower faces, said tightly wound multiple thicknesses of corrugated paperboard defining a multiplicity of load bearing beam members and adjacent shaped openings (52,53,54;55,56;57,58;59,60;61,62,63,64;65,66,67,68;) in the pallet body, said beam members being positioned to intersect those regions of the pallet body which in use are engaged by the forks of a fork lifting device during elevation of the pallet, said body being formed from a length of single-face corrugated board continuously wound to define said multiplicity of load bearing beam members and adjacent shaped openings.

2. The pallet of claim 1, wherein said shaped openings (52,53,54;55,56;57,58;59,60;61,62,63,64;65,66,67,68;) are of limited transverse dimensions so as to provide said upper load supporting face on which a person taking care can stand.

3. The pallet of claims 1 or 2, wherein said body is formed from one or more lengths of single-face corrugated paper board tightly wound with adjacent elements of the winding adhesively secured to each other.

4. The pallet of claim 3, wherein said shaped openings comprise a central circular or square opening (52), a pair of opposed generally triangular openings (53,54), a pair of truncated triangular openings (55,56) positioned at about 90° to the triangular openings (53,54), a further pair of truncated triangular openings (57,58) at about 45° to the preceding pair (53,54), a still further pair of truncated triangular openings (59,60) at about 90° to the preceding pair (57,58), two pairs of truncated triangular openings (61,62,63,64) at about 45° to each opening of the preceding pair (59,60), and a peripheral element of multiple layers of corrugated board defining a generally square periphery of the pallet and having generally triangular openings (65,66,67,68) at each corner.

5. The pallet of claim 1 or 4 further comprising feet members (69,70,71) secured to the lower face of the pallet body to define the regions of support of the pallet accessible to the forks of a fork lift device.

6. The pallet of claim 5 wherein said feet (69,70,71) comprise elongate generally rectangular elements formed from tightly wound lengths of corrugated board adhesively secured to the lower face of the pallet body.

7. A method of forming a pallet comprising continuously winding multiple layers of a narrow strip of single-face corrugated board around formers defining shaped openings of limited transverse dimensions positioned so as to define a pallet body having a multiplicity of load bearing beam members positioned to intersect regions of support of the pallet body by the forks of a fork lift device during lifting of the pallet, said shaped openings being such that the pallet body has an upper load supporting face on which a person is able with care to stand.

## Patentansprüche

1. Palette, umfassend einen Palettenkörper mit einer oberen Last tragenden Seite und einer unteren Seite, wobei der Palettenkörper aus gewellter Pappe, welche fest in mehrfachen Dicken gewickelt ist, welche in engen Kontakt zueinander mit den Riffelungen der mehrfachen Dicken sind, die sich im wesentlichen senkrecht zwischen den oberen und unteren Seiten erstrecken, wobei die fest gewickelten mehrfachen Dicken aus gewellter Pappe eine Vielzahl von Last tragenden Trägergliedern und benachbart geformte Öffnungen (52, 53, 54, 55, 56, 57, 58, 59, 60, 61, 62, 63, 64, 65, 66, 67, 68) in dem Palettenkörper definieren, wobei die Trägerglieder angeordnet sind, jene Regionen des Palettenkörpers zu überschneiden, welche bei Anwendung durch die Gabeln einer Gabelstaplervorrichtung während Erhöhung der Palette in Angriff genommen werden, wobei der Körper aus einer Länge von einzelseitig gewellter Platte, kontinuierlich gewickelt, wodurch die Vielfältigkeit der Last tragenden Trägerglieder und benachbart geformten Öffnungen definiert wird, gebildet ist.

2. Palette nach Anspruch 1, wobei die geformten Öffnungen (52, 53, 54, 55, 56, 57,58, 59, 60, 61, 62, 63, 64, 65, 66, 67, 68) von begrenzten transversalen Dimensionen sind, wodurch die obere Last tragende Seite geliefert wird, auf der eine Person, die vorsichtig ist, stehen kann.

3. Palette nach Ansprüchen 1 oder 2, wobei der Körper aus einer oder mehreren Längen von einzelseitig gewellter Pappe fest gewickelt mit benachbarten Elementen der Wicklung, anhaftend aneinander gesichert, gebildet wird.

4. Palette nach Anspruch 3, wobei die geformten Öffnungen eine zentrale kreisförmige oder rechtwinkelige Öffnung (52), ein Paar von entgegengesetzten, im allgemeinen dreiseitigen Öffnungen (53, 54), ein Paar von abgestumpften, dreiseitigen Öffnungen (55, 56), die bei etwa 90° zu den dreiseitigen (53, 54) Öffnungen angeordnet sind, ein weiteres Paar von abgestumpften, dreiseitigen Öffnungen (57, 58) bei etwa 45° zu dem vorhergehenden Paar (53, 54), noch ein weiteres Paar von abgestumpften, dreiseitigen Öffnungen (59, 60) bei etwa 90° zu dem vorhergehenden Paar (57, 58), zwei Paare von abgestumpften dreiseitigen Öffnungen (61, 62, 63, 64) bei etwa 45° zu jeder Öffnung des vorangehenden Paares (59, 60) und ein peripherales Element von mehrfachen Schichten der gewellten Platte umfassen, wodurch eine im allgemeinen rechteckige Peripherie der Platte definiert wird und im allgemeinen dreiseitige Öffnungen (65, 66, 67, 68) an jeder Ecke hat.

5. Palette nach Anspruch 1 oder 4, ferner umfassend Fußglieder (69, 70, 71), gesichert an die untere Seite des Palettenkörpers, wodurch Regionen von Unterstützung der Palette, den Gabeln einer Gabelstapelvorrichtung zugänglich, definiert werden.

6. Palette nach Anspruch 5, wobei der Fuß (69, 70, 71) verlängerte, im allgemeinen rechtwinkelige Elemente umfaßt, die aus fest gewickelten Längen von gewellter Platte anhaftend gesichert an die untere Seite des Palettenkörpers gebildet sind.

7. Verfahren zum Bilden einer Palette, umfassend kontinuierliche Wicklung mehrfacher Schichten eines engen Streifens von einzelseitig gewellter Platte um Formgeber, wodurch geformte Öffnungen von begrenzten transversalen Dimensionen definiert werden, so angeordnet, daß ein Palettenkörper mit einer Vielzahl von Last tragenden Trägergliedern, angeordnet, Regionen von Unterstützung des Palettenkörpers durch die Gabeln einer Gabelstapelvorrichtung während des Anhebens der Palette zu überschneiden, definiert wird, wobei die geformten Öffnungen derartig sind, daß der Palettenkörper eine obere Last tragende Seite hat, auf der eine Person, die achtgiebt, fähig ist, zu stehen.

## Revendications

1. Une palette comprenant un corps de palette ayant une surface supérieure de support de la charge et une surface inférieure, ce corps de palette étant formé en carton ondulé étroitement enroulé en plusieurs épaisseurs qui sont en contact intime l'une avec l'autre ,les ondulations des épaisseurs multiples s'étendant sensiblement perpendiculairement entre ces faces supérieure et inférieure, ces épaisseurs multiples étroitement enroulées de carton ondulé définissant une multiplicité d'éléments de support pour porter la charge et des ouvertures adjacentes ayant une forme donnée (52,53,54;55,56;57, 58;59,60;61,62,63,64;65,66,67,68;) dans le corps de palette, ces éléments de support étant positionnés pour intersecter ces régions du corps de palette qui ,en utilisation ,sont engagées par les fourches d'un dispositif de levage à fourches pendant l'élévation de la palette, ce corps étant formé en une longueur d'un carton ondulé à une seule face continuellement enroulé pour définir cette multiplicité d'éléments de support portant la charge et ces ouvertures adjacentes de forme donnée.

2. La palette de la revendication 1, dans laquelle ces ouvertures de forme donnée (52,53,54;55,56;57,58;59,60;61,62, 63,64;65,66,67,68;) ont des dimensions transversales limitées de façon à créer cette face supérieure de support de charge sur laquelle une personne peut se tenir debout avec précaution.

3. La palette des revendications 1 ou 2 dans laquelle ce corps est formé d'une ou plusieurs longueurs de carton ondulé à une seule face étroitement enroulé les éléments adjacents de l'enroulement étant fixés l'un à l'autre de façon adhésive.

4. La palette de la revendication 3, dans laquelle les ouvertures de forme donnée comprennent une ouverture centrale (52) circulaire ou carrée, une paire d'ouvertures généralement triangulaires (53,54) opposées, une paire d'ouvertures en triangle tronqué(55, 56) positionnées a environ 90° par rapport aux ouvertures triangulaires (53,54), une autre paire d'ouvertures en triangle tronqué (57,58) à environ 45° par rapport à la paire précédente (53,54), un autre paire encore d'ouvertures en triangle tronqué (59,60) à environ 90° par rapport à la paire précédente (57,58), deux paires d'ouvertures en triangle tronqué (61,62,63,64) à environ 45° par rapport à chaque ouverture de la paire précédente (59,60), et un élément périphérique de plusieurs couches de carton ondulé définissant une périphérie généralement carrée de la palette et ayant des ouvertures généralement triangulaires (65,66,67,68) à chaque coin.

5. La palette de la revendication 1 ou 4 comprenant en outre des éléments de pieds (69,70,71) fixés à la face inférieure du corps de palette pour définir les régions du support de la palette accessible aux fourches d'un dispositif de levage à fourches.

6. La palette de la revendication 5 dans laquelle ces éléments de pieds (69,70,71) comprennent des éléments généralement rectangulaires formés de longueurs étroitement enroulées de carton ondulé fixées de façon adhésive à la face inférieure du corps de palette.

7. Une méthode pour réaliser une palette comprenant des couches multiples continuellement enroulées d'une bande étroite de carton ondulé à une seule face autour de formes définissant les ouvertures de forme donnée de dimension transversale limitée positionnées de façon à définir un corps de palette ayant une multiplicité d'éléments de support pour porter la charge positionnés pour intersecter les régions de support du corps de palette engagées par les fourches d'un dispositif de levage à fourches pendant le levage de la palette, ces ouvertures de forme donnée étant telles que le corps de palette a une face supérieure de support de charge sur laquelle une personne peut se tenir debout avec précaution.
